(19) Europäisches Patentamt
European Patent Office
Office européen des brevets

(11) **EP 0 712 175 B1**

(12) **EUROPÄISCHE PATENTSCHRIFT**

(45) Veröffentlichungstag und Bekanntmachung des Hinweises auf die Patenterteilung:
**07.01.1999 Patentblatt 1999/01**

(51) Int Cl.[6]: **H01M 4/52**, H01M 4/50, C01G 53/04, C01G 45/02

(21) Anmeldenummer: **95116940.8**

(22) Anmeldetag: **27.10.1995**

(54) **Verfahren zur Herstellung von Mangan(III)-haltigem Nickelhydroxid**

Process for preparing manganese(III)-containing nickel hydroxide

Procédé de préparation d'un hydroxide de nickel contenant du Mn(III)

(84) Benannte Vertragsstaaten:
**BE CH DE DK ES FR GB IT LI NL PT SE**

(30) Priorität: **09.11.1994 DE 4439987**

(43) Veröffentlichungstag der Anmeldung:
**15.05.1996 Patentblatt 1996/20**

(73) Patentinhaber: **H.C. Starck GmbH & Co. KG**
**38642 Goslar (DE)**

(72) Erfinder: **Axmann, Peter**
**D-37085 Göttingen (DE)**

(74) Vertreter: **Steiling, Lothar, Dr. et al**
**Bayer AG**
**Konzernbereich RP**
**Patente und Lizenzen**
**51368 Leverkusen (DE)**

(56) Entgegenhaltungen:
**EP-A- 0 523 284          EP-A- 0 633 223**
**WO-A-94/19939**

- **CHEMICAL ABSTRACTS, vol. 123, no. 10, 4.September 1995 Columbus, Ohio, US; abstract no. 118406, XP002009554 & MATER. RES. SOC. SYMP. PROC., 369 (SOLID STATE IONICS IV) 81-6, 1995, GUERLOU-DEMOURGES, L.; DELMAS, C.: "Crystal Chemistry and electrochemical behavior of new manganese substituted nickel hydroxides"**

**Beschreibung**

Die vorliegende Erfindung betrifft ein Verfahren zur Herstellung Mangan(III)-haltiger Nickel(II)-hydroxid-Pulver, wobei mehr als 50 Mol-% des Mangans in der 3-wertigen Oxidationsstufe vorliegen, durch Kopräzipitation von Nickel-(II)- und Mangan-Salzlösungen mit Alkalilaugen.

Der Einbau von Manganionen in Nickelhydroxid ist in Power Sources 1966, Pergamon Press, Seiten 239 ff. beschrieben. Die Dotierung mit Mangan(II)-Ionen führt dabei zu einem Produkt mit $\beta$-Ni(OH)$_2$-Struktur, die Oxidation mit Wasserstoffperoxid zu amorphen Mangan(IV) Produkten. Beide Produkte weisen keine Verbesserungen der elektrochemischen Eigenschaften im Vergleich zu undotiertem Nickelhydroxid auf.

Aus der älteren nicht vorveröffentlichten deutschen Patentanmeldung P 43 23 007.5 EP-A-633 223 geht hervor, daß der Einbau von dreiwertigem Mangan in das Nickelhydroxid zu deutlich verbesserter Zyklenstabilität führt und somit zu erhöhter Ausnutzung des Einelektronenschritts bei gleichzeitiger Einsparung von Nickel. Das Produkt kann durch Umsetzung einer Mn(III)- und Ni(II)-Ionen enthaltenden Lösung mit Alkalilaugen hergestellt werden.

Nachteilig ist bei diesem Verfahren der Einsatz von großen Mengen an Mineralsäuren wie H$_3$PO$_4$ oder H$_2$SO$_4$, deren Anionen zur Stabilisierung des dreiwertigen Mangans in der Salzlösung notwendig sind. Diese oder andere geeignete Anionen verhindern vorzeitige Zersetzung des Mn(III) durch Disproportionierung. Darüber hinaus erfordert das Verfahren große Mengen an Alkalilaugen, womit ein überstöchiometrischer Anfall an Neutralsalzen verbunden ist, welche über das Abwasser entsorgt werden müssen.

Aufgabe der vorliegenden Erfindung ist die Bereitstellung eines umweltfreundlichen Verfahrens zur Herstellung Mn(III)-haltiger Nickelhydroxide.

Es wurde nun gefunden, daß eine Fällung von Ni(II) und Mn(II)-Salzen aus alkalischer Lösung mit anschließender selektiver Oxidation des Mangans überraschenderweise zu einem Mn(III)-haltigen Nickelhydroxid mit Pyroauritstruktur führt. Dabei müssen die Bedingungen für die Fällung und die Oxidation sorgfältig eingehalten werden, um eine Weiteroxidation der Mn(III)-Ionen zu vierwertigem Mangan und den Zerfall der Pyroauritstruktur zu verhindern.

Gegenstand dieser Erfindung ist somit ein Verfahren zur Herstellung Mangan(III)-haltiger Nickel(II)-hydroxid-Pulver, wobei mehr als 50 Mol-% des Mangans in der 3-wertigen Oxidationsstufe vorliegen, durch Kopräzipitation von Nickel(II)- und Mangan-(II)-Salzlösungen mit Alkalilaugen, wobei in zweiwertigem Zustand vorliegende Nickel- und Mangan-Salzlösungen kopräzipitiert werden und das im Kopräzipität enthaltende Mangan mit geeigneten Oxidationsmitteln in die 3-wertige Oxidationsstufe überführt wird.

Die Oxidation kann kontinuierlich oder diskontinuierlich durch Zugabe geeigneter Oxidationsmittel erfolgen. Bevorzugte Oxidationsmittel im Sinne dieser Erfindung sind Sauerstoff, Luft und/oder Wasserstoffperoxid. Diese Oxidationsmittel weisen u.a. den Vorteil auf, daß sie keine zusätzlichen Anionen in das Reaktionsmedium bringen. Vorteilhaft können aber auch Peroxodisulfate, Chlor oder Brom eingesetzt werden.

Auch die Vereinigung des Oxidationsmittels mit der Nickel(II)- und der Mangan(II)-Ionen enthaltenden Salzlösung vor der Zugabe zum Kopräzipität kann vorteilhaft durchgeführt werden, wobei durch Einhalten des pH-Wertes in der Salzlösung sichergestellt werden muß, daß nicht bereits hier eine Oxidation der Mangan(II)-Ionen erfolgt.

Ebenso ist ein mehrstufiger Prozeß durchführbar, bei dem in einem ersten Schritt das Ni(II)- und Mn(II)-haltige Mischhydroxid in Abwesenheit von Oxidationsmitteln gefällt und das primäre Fällprodukt dann in einem zweiten Schritt durch Überführung in eine oxidierende Vorlage zu Mn(III)-haltigem Nickelhydroxid oxidiert wird.

Eine vorteilhafte Variante des erfindungsgemäßen Verfahrens besteht darin, daß die Oxidation im alkalischen Milieu vorgenommen wird, wobei mindestens 80 Mol-%, bevorzugt mindestens 90 Mol-% des Mangans in die 3-wertige Oxidationsstufe überführt werden.

Die Ni(II)- und Mn(II)-Ionen enthaltende Salzlösung kann vorteilhaft durch Auflösung der entsprechenden Salze, vorzugsweise der Sulfate, Phosphate, Chloride und/oder Nitrate hergestellt werden.

Als Alkalilaugen können NaOH und/oder KOH eingesetzt werden, wobei bei weiterer Anwesenheit von Ammoniak sphärische Produkte erhalten werden.

Im Vergleich zum in der deutschen Patentanmeldung P 43 23 007.5 offenbarten Verfahren kann beim erfindungsgemäßen Verfahren die Salzfracht auf ein Drittel reduziert werden. Eine weitere Reduzierung gelingt, wenn die im zweiwertigen Zustand vorliegenden Nickel- und Mangan-Salzlösungen durch anodische Auflösung von metallischem Nickel und/oder Mangan hergestellt werden.

Eine verfahrenstechnisch günstige Ausführungsform des erfindungsgemäßen Verfahrens besteht weiterhin darin, daß die im zweiwertigen Zustand vorliegenden Nickel- und Mangansalzlösungen durch anodische Auflösung von metallischem Nickel und durch Lösen von Mangan(II)-Salzen hergestellt werden.

Für den Fall, daß das erfindungsgemäß hergestellte Mn(III)-haltige Nickelhydroxid Dotierungselemente enthalten soll, wie es teilweise an Nickelhydroxid für die Herstellung von Batterien gefordert wird, kann das erfindungsgemäße Verfahren bevorzugt in Gegenwart von Zink-, Cadmium-, Calcium-, Magnesium-, Cobalt-, Aluminium-, Eisen-, Chrom-, Gallium-, Indiumsalzen und/oder Salzen der Seltenerdelemente durchgeführt werden.

Besonders vorteilhaft am erfindungsgemäßen Verfahren ist, daß keine instabilen Zwischenstufen in der Salzlösung auftreten. Die Konzentration der Salzlösung kann daher sehr hoch eingestellt werden, wodurch hohe Durchsätze ermöglicht werden.

Weiterhin kommt dieses Verfahren ohne stabilisierende Anionen aus. Diese Tatsache ermöglicht die freie Wahl der zu verwendenden Anionen, wodurch Einfluß auf die elektrochemischen Eigenschaften des Endprodukts genommen werden kann.

Das erfindungsgemäß erhältliche Mangan(III)-haltige Nickelhydroxid-Pulver eignet sich hervorragend als Elektrodenmaterial in Sekundärbatterien. Diese Verwendung ist somit auch Gegenstand dieser Erfindung.

Im folgenden wird die Erfindung beispielhaft erläutert, ohne daß hierin eine Einschränkung zu sehen ist.

**Beispiel**

$$4\ NiCl_2 + MnCl_2 + 1/3\ H_3PO_4 \xrightarrow[\text{2.) Oxidation}]{\text{1.) NaOH}} [Ni^{II}_4Mn^{III}(OH)_{10}](PO_4)_{1/3}$$

Lösung 1:

| | |
|---|---|
| 751 ml wäßrige $NiCl_2$-Lösung mit 125 g Ni/l | (1,6 mol) |
| 50 g $MnCl_2$ | (0,4 mol) |
| 10,8 ml konz. $H_3PO_4$ | (0,13 mol) |

Lösung 2:    wäßrige NaOH-Lösung mit 150 g NaOH/l

**Versuchsbeschreibung:**

In einem thermostatierten 5 l-Becherglas wurden bei einer Temperatur von 35°C 1,5 l Wasser vorgelegt und mit Hilfe von Lösung 2 auf einen pH-Wert von 12-12,5 eingestellt. Zu der alkalischen Vorlage wurde dann langsam (1 Tropfen pro Sekunde) die Lösung 1 mittels einer Schlauchpumpe getropft. Der pH-Wert wurde über die gesamte Versuchsdauer mittels einer Glaselektrode kontrolliert und gegebenenfalls durch elektronisch geregelte Zugabe von Lösung 2 auf einem Wert von 12-12,5 konstant gehalten. Durch Rühren mit einem Flügelrührer (350 Umdrehungen pro Minute) wurde eine Thrombe erzeugt und so ständig Luftsauerstoff in die bräunlich-grünliche Suspension eingetragen. War die gesamte Menge an Lösung 1 zugetropft, wurde der entstandene bräunliche Niederschlag auf einer Labornutsche abgenutscht und mit 60°C warmem Wasser neutralsalzfrei gewaschen. Das noch feuchte Produkt wurde anschließend bei 70°C in einem Vakuumtrockenschrank 24 h lang getrocknet und mit einem Mörser zerkleinert.

Analysen:

| Gehalt an | gefunden | theoretisch |
|---|---|---|
| Ni | 43,53 % | 47,8 % |
| Mn | 9,58 % | 11,2 % |

Die Röntgenbeugungsanalyse (RBA) ergab das Pyroaurit-Spektrum.

**Patentansprüche**

1.  Verfahren zur Herstellung Mangan(III)-haltiger Nickel(II)-hydroxid-Pulver, wobei mehr als 50 Mol-% des Mangans in der 3-wertigen Oxidationsstufe vorliegen, durch Kopräzipitation von Nickel(II)- und Mangan-Salzlösungen mit Alkalilaugen, dadurch gekennzeichnet, daß in zweiwertigem Zustand vorliegende Nickel- und Mangan-Salzlösungen kopräzipitiert werden und das im Kopräzipitat enthaltende Mangan mit geeigneten Oxidationsmitteln in die 3-wertige Oxidationsstufe überführt wird.

2.  Verfahren gemäß Anspruch 1, dadurch gekennzeichnet, daß als Oxidationsmittel Sauerstoff, Luft und/oder Wasserstoffperoxid eingesetzt werden.

3. Verfahren gemäß Anspruch 1, dadurch gekennzeichnet, daß als Oxidationsmittel Peroxodisulfate, Chlor oder Brom eingesetzt werden.

4. Verfahren gemäß einem oder mehreren der Ansprüche 1 bis 3, dadurch gekennzeichnet, daß die Oxidation im alkalischen Milieu vorgenommen wird, wobei mindestens 80 Mol-%, bevorzugt mindestens 90 Mol-%, des Mangans in die 3-wertige Oxidationsstufe überführt werden.

5. Verfahren gemäß einem oder mehreren der Ansprüche 1 bis 4, dadurch gekennzeichnet, daß die im zweiwertigen Zustand vorliegenden Nickel- und Mangan-Salzlösungen durch Lösen von Nickel(II)- und Mangan(II)-Chloriden, Sulfaten, Nitraten und/oder Phosphaten hergestellt werden.

6. Verfahren gemäß einem oder mehreren der Ansprüche 1 bis 4, dadurch gekennzeichnet, daß die im zweiwertigen Zustand vorliegenden Nickel- und Mangan-Salzlösungen durch anodische Auflösung von metallischem Nickel und/oder Mangan hergestellt werden.

7. Verfahren gemäß einem oder mehreren der Ansprüche 1 bis 6, dadurch gekennzeichnet, daß die im zweiwertigen Zustand vorliegenden Nickel- und Mangansalzlösungen durch anodische Auflösung von metallischem Nickel und durch Lösen von Mangan(II)-Salzen hergestellt werden.

8. Verfahren gemäß einem oder mehreren der Ansprüche 1 bis 7, dadurch gekennzeichnet, daß die Kopräzipitation in Gegenwart von löslichen Salzen der Elemente Zn, Cd, Ca, Mg, Co, Al, Fe, Cr, Ga, In und/oder der Seltenerdelemente durchgeführt wird.

## Claims

1. A process for the preparation of manganese(III)-containing nickel(II) hydroxide powders, more than 50 mole % of the manganese being present in the trivalent oxidation state, by co-precipitation of nickel(II) and manganese salt solutions with alkali liquors, characterised in that nickel and manganese salt solutions present in the divalent state are coprecipitated and the manganese contained in the coprecipitate is converted to the trivalent oxidation state with suitable oxidising agents.

2. A process according to claim 1, characterised in that oxygen, air and/or hydrogen peroxide are used as oxidising agents.

3. A process according to claim 1, characterised in that peroxodisulfates, chlorine or bromine are used as oxidising agents.

4. A process according to one or more of claims 1 to 3, characterised in that oxidation is carried out in an alkaline medium, at least 80 mole %, preferably at least 90 mole % of the manganese being converted to the trivalent oxidation state.

5. A process according to one or more of claims 1 to 4, characterised in that the nickel and manganese salt solutions present in the divalent state are prepared by dissolution of nickel(II) and manganese(II) chlorides, sulfates, nitrates and/or phosphates.

6. A process according to one or more of claims 1 to 4, characterised in that the nickel and manganese salt solutions present in the divalent state are prepared by anodic dissolution of metallic nickel and/or manganese.

7. A process according to one or more of claims 1 to 6, characterised in that the nickel and manganese salt solutions present in the divalent state are prepared by anodic dissolution of metallic nickel and by dissolution of manganese (II) salts.

8. A process according to one or more of claims 1 to 7, characterised in that co-precipitation is carried out in the presence of soluble salts of the elements Zn, Cd, Ca, Mg, Co, Al, Fe, Cr, Ga, In and/or the rare earth elements.

**Revendications**

1.  Procédé pour la préparation de poudre d'hydroxyde de nickel(III contenant du manganèse(III), dans lequel plus de 50 moles % du manganèse sont présents dans le troisième degré d'oxydation, par coprécipitation de solutions salines de nickel(II) et de manganèse avec des alcalis, caractérisé en ce qu'on coprécipite des solutions salines de nickel et de manganèse présentes à l'état bivalent, et on transforme le manganèse contenu dans le coprécipité avec des agents d'oxydation appropriés pour l'amener au troisième degré d'oxydation.

2.  Procédé selon la revendication 1, caractérisé en ce qu'on met en oeuvre, à titre d'agent d'oxydation, de l'oxygène, de l'air et/ou du peroxyde d'hydrogène.

3.  Procédé selon la revendication 1, caractérisé en ce qu'on met en oeuvre, à titre d'agent d'oxydation, des peroxodisulfates, du chlore ou du brome.

4.  Procédé selon une ou plusieurs des revendications 1 à 3, caractérisé en ce qu'on procède à l'oxydation dans un milieu alcalin, dans lequel on transforme le manganèse pour l'amener au troisième degré d'oxydation à concurrence d'au moins 80 moles %, de préférence d'au moins 90 moles %.

5.  Procédé selon une ou plusieurs des revendications 1 à 4, caractérisé en ce qu'on prépare les solutions salines de nickel et de manganèse présentes à l'état bivalent, par dissolution de chlorures, de sulfates, de nitrates et/ou de phosphates de nickel(II) et de manganèse(II).

6.  Procédé selon une ou plusieurs des revendications 1 à 4, caractérisé en ce qu'on prépare les solutions salines de nickel et de manganèse présentes à l'état bivalent, par dissolution anodique de nickel et/ou de manganèse métalliques.

7.  Procédé selon une ou plusieurs des revendications 1 à 6, caractérisé en ce qu'on prépare des solutions salines de nickel et de manganèse présentes à l'état bivalent, par dissolution anodique de nickel métallique et par dissolution de sels de manganèse(II).

8.  Procédé selon une ou plusieurs des revendications 1 à 7, caractérisé en ce qu'on effectue la coprécipitation en présence de sels solubles des éléments Zn, Cd, Ca, Mg, Co, Al, Fe, Cr, Ga, In et/ou des éléments des terres rares.